Europäisches Patentamt

European Patent Office

Office européen des brevets

(11) Publication number: **0 435 606 A2**

# EUROPEAN PATENT APPLICATION

(21) Application number: 90314128.1

(22) Date of filing: **21.12.90**

(51) Int. Cl.5: **A21D 8/04**, A21D 2/18,
A21D 2/16, A21D 2/26

(30) Priority: **26.12.89 JP 339837/89**
**27.03.90 JP 77667/90**

(43) Date of publication of application:
**03.07.91 Bulletin 91/27**

(84) Designated Contracting States:
**DE FR GB IT**

(71) Applicant: **ICHINOBE BAKING CO. LTD**
**38, Ichinohe-aza-honmachi, Ichinohe-cho**
**Ninohe-gun, Iwate-ken(JP)**

Applicant: **DAIKIN INDUSTRIES, LIMITED**
**Umeda Center Building 4-12 Nakazaki-nishi**
**2-chome Kita-ku**
**Osaka 530(JP)**

(72) Inventor: **Hasebe, Toshiyuki**
**3-1-2, Shiroshita**
**Hachinohe-shi, Aomori-ken(JP)**
Inventor: **Torao, Kazuhiko**
**4-7-9, Shiroshita**
**Hachinohe-shi, Aomori-ken(JP)**
Inventor: **Obata, Kazuaki**
**2-5-5, Oka-kamino-cho**
**Toyonaka-shi, Osaka(JP)**
Inventor: **Higashiura, Tadashi**
**2-6-4, Itsukaichi**
**Ibaraki-shi, Osaka(JP)**

(74) Representative: **Silverman, Warren et al**
**HASELTINE LAKE & CO. Hazlitt House 28**
**Southampton Buildings Chancery Lane**
**London WC2A 1AT(GB)**

(54) Dough for bread making.

(57) Dough for bread making is disclosed which comprises wheat flour, water, yeast, an enzyme, and at least one substance with the property of increasing water absorption, selected from the group consisting of saccharides, oils or fats, and dairy products, wherein the enzyme is capable of decomposing the components of the wheat flour, and the substance with the property of increasing water absorption, when compounded with the dough, effectively raises the water absorption of the dough.

EP 0 435 606 A2

# DOUGH FOR BREAD MAKING

The present invention relates to bread dough prepared by the use of enzymes and a method bread making using this bread dough.

As has been known for some time past, the use of enzymes such as amylase and proteases in bread dough for the preparation of bread is effective in promoting the fermentive activity of yeast or in imparting extensibility and thereby increasing the gas retention capacity of the bread dough. This is due to the promotion by the aforesaid enzymes of the hydrolysis of the starch which forms the greater portion of the wheat flour constituting the raw material of the bread dough, thereby facilitating the utilization of the raw material by the yeast. As a result, the fermentation requires a shorter time, and the volume of the bread dough increases, thus permitting the bread making to create a more pleasant textural sensation when eaten. However, if the enzymes act for a prolonged period of time, then the hydrolysis of the starch proceeds to an excessive degree and consequently the bread dough softens and becomes sticky or tacky; as a consequence, handling becomes difficult, the quality of the bread so obtained markedly deteriorates, and moreover, the volume of the bread diminishes. Thus, in actual bread making, process control becomes difficult, therefore bread of good quality is difficult to obtain. For these reasons, enzymes are scarcely used in actual bread making processes. Even if used, enzymes are employed only in low concentrations which do not give rise to the above-mentioned stickiness or tackiness. However, enzymes display slight efficacy in such restricted concentrations.

Ordinarily, however, if it is possible to prolong fermentation time, bread making processes possess the advantage of allowing control of time in the line production. For example, techniques for the storage or fermentation of bread dough at low temperatures are known (Japanese Laid-Open Patent Publication Nos. 56-26373, 56-46731 and 62-11564). Storage or fermentation at low temperatures in this manner permits the bread making with richer flavor than that of bread produced by previously existing making processes. The upper limits of fermentation time allowable when using these methods are approximately 72 hours for the sponge and dough method and approximately 5 weeks for the straight dough method. However, a process for the preparation of bread dough which permits even greater prolongation of the permissible fermentation period, without adverse effects upon the handling of the bread dough, constitutes an important desideratum in the bread making industry.

A dough for bread making of this invention, which overcomes the above-discussed and numerous other disadvantages and deficiencies of the prior art, comprising the ingredients wheat flour, water, yeast, an enzyme, and at least one substance with the property of increasing water absorption, selected from the group consisting of saccharides, oils or fats, and dairy products, wherein the enzyme is capable of decomposing the components of the wheat flour, and the substance with the property of increasing water absorption, when compounded with the dough, effectively raises the water absorption of the dough.

A method of bread making comprises fermenting the dough and baking the dough after the fermentation (i.e. final proof).

In a preferred embodiment, the enzyme is selected from amylase and a protease.

In another preferred embodiment, the method uses the sponge and dough method, wherein the dough fermentation is conducted in the unfrozen state, at a temperature in the range of -10 to 10°C, for a period not exceeding approximately 15 weeks.

In a further preferred embodiment, the method uses the straight dough method, wherein the fermentation is conducted in the unfrozen state, at a temperature in the range of -10 to 10°C, for a period not exceeding approximately 15 weeks.

Thus, the invention described herein makes possible the objectives of (1) providing bread dough with excellent handling, employing enzymes which promote fermentation by yeast and impart extensibility, thus increasing the gas retention capacity of the bread dough, and moreover, without creating stickiness in the kneading or fermentation processes; (2) providing bread dough capable of maintaining an excellent state of fermentation for a comparatively long period of time, with little tendency to drop during the fermentation process; (3) providing bread dough permitting the substantial prolongation of fermentation time; (4) providing a method for making high-quality bread, using the aforesaid bread dough, which, moreover, is not easily prone to deterioration (staling); (5) providing a method for bread making, which easily permits the production of bread from uniform bread dough of a comparatively large volume, this bread being characterized by excellent textural sensation when eaten and comparatively slow deterioration due to staling; and (6) providing a method for bread making, which is suitable for mass production by line production and easily permits the production of uniform, high-quality bread.

Any type of wheat flour conventionally used for the preparation of bread dough may be employed as the raw material for the bread dough of the present invention. Ordinarily, strong flour (containing 11.7-13.0% protein), semistrong flour (containing 10.5-12.0% protein) or the like is suitable for the present purpose. The capacity for the bread to retain gas and rise well derives from the composite protein gluten, which is formed when water is added to the wheat flour and the mixture is kneaded. For this reason, the wheat flour used contains the aforesaid quantities of protein, so as to permit the formation of gluten in the appropriate proportion.

A yeast appropriate for the present purpose is the species Saccharomyces cerevisiae which is used for conventional bread making. The proportion of yeast added is ordinarily 2-8% relative to the weight of wheat flour used.

The enzymes used in the present invention are those which decompose the components of wheat flour. In particular, amylase, which hydrolyzes starch; or proteases, which can hydrolyze the components of protein, in particular, the gluten formed by kneading the bread dough, are suitable for the present purpose. Amylase, particularly amylase derived from microorganisms of the genus Aspergillus, and more particularly from strains belonging to the Aspergillus K27 group (for example, the Aspergillus K27 AC-1 strain; this microorganism has been deposited with the Fermentation Research Institute, Ibaragi-ken, Japan, under the Accession Number FERM P-7158), is most suited for the present purpose. Commercially available amylase derived from this Aspergillus K27 AC-1 strain include, for example, Dabiase K27 (Daikin Industries, Ltd.). Amylase derived from strains belonging to the aforesaid Aspergillus K27 group possess high starch-hydrolyzing potency, and can even hydrolyze the $\alpha$-amylase resistant starch which is produced in processes for the conversion of starch to simpler saccharides. The aforesaid amylase hydrolyzes the starch contained in wheat flour into smaller saccharides, thereby providing adequate substrates for yeast fermentation. Therefore, the fermentation time in the line production of bread can be prolonged, thus permitting the excellent bread making with little drop of bread dough. As for proteases, various known enzymes of this type are applicable, including, for example, proteases originating from Aspergillus oryzae or from Bacillus subtilis. As mentioned above, proteases are employed for the purpose of decomposing the gluten formed in the bread dough. By decomposing the gluten to an appropriate degree, extensibility is imparted to the bread dough, thereby elevating the gas retention capacity of the bread dough.

The bread dough of the present invention contains substances capable of increasing the water-absorption (i.e., water retentivity) of the bread dough, with the purpose of suppressing stickiness. As substances suitable for increasing water absorption, one or more substances chosen from the categories of sugars, oils, fats and dairy products may be used. If such a substance is compounded with the bread dough, then the water absorption of the bread dough is elevated and consequently the moisture-retaining capacity of the bread dough is enhanced. That is, if the bread dough contains the aforesaid substance for increasing water absorption in addition to enzymes, then the stickiness of the bread dough can be effectively suppressed.

Among the sugars which can increase the water absorption of the bread dough are isomalto-oligosaccharides, sucrose, fructose, dietary fibers, maltodextrins, and $\alpha$-starch, etc.

The term "isomalto-oligosaccharides" cited above refers to branched saccharides such as isomaltose, panose, etc. In general, the substances commercially available as isomalto-oligosaccharides are mixtures obtained by allowing starch to react with $\beta$-amylase and transglucosidase after liquefaction with $\alpha$-amylase. Such mixtures, in addition to branched saccharides such as isomaltose, panose, etc., also include glucose, maltose, maltotriose, etc. These mixtures can also be used for the purpose of the present invention. Among the constituents of the aforesaid isomalto-oligosaccharide mixtures, the glucose and maltose are utilized by the yeast, but the branched saccharide fractions are not so utilized, and thus the pleasant mellow sweetness characteristic of isomalto-oligosaccharides remains in the bread dough. Commercially available isomalto-oligosaccharides include ISOMALTO 500 (Showa Sangyo, Ltd.), ISO (Nippon Shiryo Kogyo, Ltd. ), Biotose #50 (Nippon Shokuhin Kako, Ltd.,etc.), or the like.

The aforesaid term "dietary fibers" refers to relatively indigestible, primarily vegetable fibers which occur in food products. Applicable types of fibers in this category include wheat fibers, apple fibers, cellulose, etc.

The aforesaid maltodextrins are mainly starches which have undergone an appropriate degree of hydrolysis by enzymes. For example, among the corn syrups, low D.E. (dextrose equivalent) corn syrup belongs to the category of maltodextrins. Commercially available products in this category include Amycol No. 6L (Nichiden Kagaku, Ltd.), SANDEKKU (Sanwa Denpun, Ltd.), etc.

The aforesaid term "$\alpha$-starch" refers to a product obtained by gelatinizing starch by heat or alkali treatment, and then pulverizing the starch while maintaining this gelatinized form intact, for example, by a method such as abrupt dehydration and drying, etc. The category referred to here also includes partial $\alpha$-starches obtained by partial gelatinization. Commercially available products in this category include, for example, Amycol H, (Nichiden Kagaku, Ltd.), PCS (Asahi Kasei Kogyo, Ltd.), etc.

Among the aforesaid fats or oils suitable for elevating the water absorption of bread dough, shortening, margarine, powdered fats, etc., can be cited. The aforesaid term "powdered fats" refers to products obtained by pulverizing a fat which is solid at room temperature, or by impregnating a suitable powder such as starch with a fat or oil which is liquid at room temperature. Applicable commercially available powdered fats include Magic Fat (Miyoshi Yushi, Ltd. ),etc.

Among the dairy products suitable for elevating the water absorption of bread dough are, for example, fresh milk, whole milk powder, skim milk powder, fresh cream, yoghurt, etc. In particular, when fresh milk, fresh cream, yoghurt or other dairy products with a substantial moisture content are used for this purpose, the quantities to be used must be determined in consideration of the total water content in the ingredients of the bread dough.

Among the aforesaid substances applicable for increasing the water absorption of the bread dough, isomalto-oligosaccharides and/or fructose are particularly suitable for this purpose.

If the aforesaid substance for increasing water absorption is contained in the bread dough, then, as stated above, not only is the stickiness of the bread dough inhibited, but also added extensibility is imparted to the bread dough, hence, bread with a large volume can be obtained. Furthermore, such additives are also effective in preventing the degradation of the starch. The appropriate content of aforesaid substance for increasing water absorption is 1-20 parts by weight relative to 100 parts by weight of wheat flour.

The water content of the bread dough ingredients should ordinarily be 60-75 parts by weight relative to 100 parts by weight of wheat flour; however, this value should be adjusted in consideration of the water content of the aforesaid substance which is added to increase water absorption.

Furthermore, the ingredients of the bread dough according to the present invention may, if required, also contain any of the various materials used in conventional processes for bread making; these includes, for example, various types of saccharides, oils or fats, salt, yeast foods, emulsifiers, nutritional supplements, or other appropriate additives. Saccharides are added to supply nutrients for utilization by yeast or to impart sweetness, and may be, for example, sucrose, glucose, maltose, etc. Applicable oils or fats include those ordinarily used in bread making, such as butter, margarine, shortening, etc. Salt is added to adjust the flavor of the bread, moreover, the degree of fermentation can also be regulated by varying the salt content. Furthermore, salt also possesses an inhibitory effect upon the stickiness of the bread dough. Yeast food consists primarily of inorganic salts containing nitrogen, phosphorus, etc., thus serving as a source of nutrients to assist the proliferation of the yeast. Also, yeast food ordinarily contains oxidizing agents such as potassium bromate or ascorbic acid which serve to promote the oxidation of the bread dough as well as strengthening the bread dough. As regards the choice between potassium bromate and ascorbic acid, ascorbic acid is preferable from the viewpoint of safety. Previously, bread dough using yeast food containing ascorbic acid has been known as readily prone to damage and of poor extensibility. However, if ascorbic acid is contained in the bread dough ingredients compounded in accordance with the present invention, then the bread dough is resistant to damage, and, moreover, possesses superior extensibility. The emulsifiers are added to improve the quality of bread and prevent the staling thereof. An example is a monoglyceride. The nutritional supplements are vitamin A, $B_1$, $B_2$, calcium compounds, lysine, or the like. Other additives are colorants, conserving agents or the like. These various materials may include substances with the effect as the aforesaid substance for increasing absorption.

Bread is made according to the present invention with bread dough containing the aforesaid ingredients. This bread can be made by the conventional processes of mixing, kneading, fermentation and baking. Either the straight dough method, wherein all of the wheat flour is mixed and kneaded at the start, or the sponge and dough method, wherein the overall quantity of wheat flour is divided into two parts prior to the mixing and kneading procedures, can be used for the process of the present invention. when the bread is made by the straight dough method, then, for example, the materials other than wheat flour are first dissolved in water and then added in the form of a solution to the entire quantity of wheat flour. Ordinarily, since the oils or fats are difficult to mix with other ingredients, the oils or fats are added after the aforesaid materials have been mixed. However, in the present invention, if powdered oils or fats are used, these can be mixed with the wheat flour at the very start of the process; if oils or fats in liquid or paste form are used, these are added after the wheat flour and the other ingredients have been mixed, as in conventional processes. Gluten is formed in the course of mixing the materials, and this gluten then undergoes fermentation.

On the other hand, if the sponge and dough method is used, then, first, 50 percent by weight or more of the entire quantity of wheat flour, yeast, enzymes, at least one substance from the aforesaid three categories of saccharides, oils or fats, and dairy products, included for the purpose of increasing water absorption, together with an appropriate quantity of water, and, if required, other components such as saccharides or yeast food, are mixed, kneaded and fermented. Then, to this mixture are added the remaining wheat flour, water, and other ingredients if required, after which the entire mass of bread dough is mixed, kneaded and fermented.

Irrespective of whether the aforesaid straight dough method or the sponge and dough method is employed, the fermentation temperature, fermentation time, and other conditions of the manufacturing process may be selected as in conventional bread making methods. However, in the application of the present method, a comparatively long period of fermentation in the unfrozen state within the temperature range of -10 to 10°C or, more preferably, -4 to 4°C, is recommended; for example, when the straight dough method is employed, a period not exceeding approximately 15 weeks, preferably approximately 5 hours to 96 hours is suitable, while if the sponge and dough method is used, then a period not exceeding approximately 15 weeks, preferably approximately 72 hours to 500 hours is appropriate. Thus, the bread of the present invention is obtained by baking, in accordance with conventional methods, of the bread dough prepared as described above by either the straight dough method or the sponge and dough method after an adequate period of fermentation.

The bread dough of the present invention contains enzymes such as amylase or proteases which decompose the components of the wheat flour, and therefore, in particular, the starch forming the greater part of the wheat flour is hydrolyzed to a certain extent, thereby assuming a form more easily utilized by the yeast; hence, the commencement of fermentation is more rapid. Also, since added extensibility is imparted to the bread dough and, moreover, larger quantities of gas are generated bread with a large volume and a pleasant chewing texture is obtained. Furthermore, since the bread dough contains at least one substance from the categories of saccharides, oils or fats, and dairy products as a substance for increasing absorption, no undue softening or stickiness occurs in the processes of mixing, kneading or fermentation, and hence the handling of the bread dough is excellent.

At present, the aforesaid sponge and dough method is the most prevalent method of bread making. When bread is made on the line production using the sponge and dough method, then, for example, if the relative proportion of the sponge dough is 70% (i.e., 70 percent by weight of the total quantity of wheat flour is used in the sponge dough), then, if the sponge dough has been properly fermented, the required fermentation time is approximately 4 hours. However, the gluten is denatured when the fermentation time reaches approximately 3 hours, and drop of the bread dough may occur. However, if bread dough according to the present invention is used, then, although fermentation commences early, the progress of fermentation is comparatively gentle, and moreover, as stated above, the bread dough possesses excellent extensibility, hence, drop of the bread dough, or softening of the starch or gluten, is unlikely to occur. Therefore, the time of fermentation of the sponge dough can be prolonged by a factor of 1.5-2.0 times. In conventional methods for making buns, if sugar is added to the sponge dough, then this is utilized by the yeast, consequently, fermentation proceeds very abruptly, and drop of the bread dough may occur within a short time. However, this shortcoming is eliminated by the method of the present invention, whereby, for example, if an 85% sugar-added sponge dough is used, the fermentation time can be extended to approximately four hours.

Furthermore, if the bread dough of the present invention is fermented in the unfrozen state at a temperature in the range of -10 to 10°C, then the length of this process can be prolonged to a period of approximately 15 weeks. This facilitates the control of time in the line production, and permits the bread making with a richer flavor. The fermentation time of the sponge dough can be adjusted in accordance with the composition of the bread dough, temperature conditions, etc.

The bread obtained using the aforesaid bread dough is comparatively voluminous, with approximately 5-10% greater volume than that of bread made by conventional methods. This bread possesses excellent chewing texture, and deterioration of this bread due to staling is extremely slow.

The present invention will be explained with reference to the following examples.

Example 1

(1) Preparation of sponge dough

All of the ingredients indicated in Table 1, except for the strong wheat flour, were dissolved in water. Next, 7,000 g of strong wheat flour were placed in a mixer, the aforesaid ingredients dissolved in water were added, and then the mixture was mixed at a low speed (30-35 rpm) for 3 minutes and then at a high speed (60-70 rpm) for 3 minutes. The mixed bread dough was then transferred to a lightly greased vessel or box and allowed to ferment for a period of 4 hours at a temperature of 28°C and a relative humidity of 80%.

(2) Preparation of bread dough

The sponge dough obtained as indicated in paragraph (1) above was then transferred to a mixer, and after adding the ingredients indicated in Table 2, the mixture was mixed at a low speed (30-35 rpm) for 3 minutes. Next, the mixture was mixed at high speed (60-70 rpm) for approximately 6 to 8 minutes, thereby obtaining the desired bread dough. The aforesaid mixing operations were conducted at a temperature of 28°C.

Example 2 - 9

Bread dough was prepared by the same process as that used in Example 1, except that the ingredients indicated in Tables 1 and 2 were used. In Examples 4 and 8, when the sponge dough was prepared, the shortening was added and the mixture was kneaded after the strong wheat flour and the other ingredients (except for the shortening), previously dissolved in water, had been uniformly mixed.

Table 1

| Ingredients for sponge dough (g) | | Example | | | | | | | | |
|---|---|---|---|---|---|---|---|---|---|---|
| | | 1 | 2 | 3 | 4 | 5 | 6 | 7 | 8 | 9 |
| | Strong wheat flour | 7,000 | 7,000 | 7,000 | 7,000 | 7,000 | 7,000 | 7,000 | 7,000 | 7,000 |
| | Skim milk powder | 200 | — | — | — | — | 200 | — | — | — |
| | PC 200 [1] | — | 200 | — | — | — | — | 200 | — | — |
| | Isomalto 500 [2] | — | — | 500 | — | — | — | — | — | — |
| | Amycol No.6L [6] | — | — | — | — | — | — | — | — | 200 |
| | Sucrose | — | — | — | — | 500 | — | — | — | — |
| | Shortening | — | — | — | 500 | — | — | — | 500 | — |
| | Yeast | 200 | 200 | 200 | 200 | 200 | 200 | 200 | 200 | 200 |
| | Emulsifier | 30 | 30 | 30 | 30 | 30 | 30 | 30 | 30 | 30 |
| | Sankyo food [3] | 10 | 10 | 10 | 10 | 10 | — | — | — | 10 |
| | French food [4] | — | — | — | — | — | 20 | 20 | 20 | — |
| | Dabiase K27 [5] | 10 | 10 | 10 | 10 | 10 | 10 | 10 | 10 | 10 |
| | Water | 4,200 | 4,400 | 4,000 | 4,200 | 4,200 | 4,200 | 4,400 | 4,200 | 4,200 |
| Total (g) | | 11,650 | 11,850 | 11,750 | 11,950 | 11,950 | 11,660 | 11,860 | 11,960 | 11,650 |

[1] Manufactured by Pfizer Co., Ltd. Insoluble dietary fiber

[2] Manufactured by Showa Sangyo, Ltd. Isomalto-oligosaccharicle

[3] Manufactured by Sankyo Foods, Ltd. Yeast food containing potassium bromate (inorganic)

[4] Manufactured by Sankyo Foods, Ltd. Yeast food containing ascorbic acid (inorganic)

[5] Manufactured by Daikin Industries, Ltd. amylase

[6] Manufactured by Nichiden Kagaku, Ltd. maltodextrin

EP 0 435 606 A2

## Table 2

EP 0 435 606 A2

| | | Example | | | | | | | | |
|---|---|---|---|---|---|---|---|---|---|---|
| | | 1 | 2 | 3 | 4 | 5 | 6 | 7 | 8 | 9 |
| Ingredients of bread dough except for sponge dough (g) | Strong wheat flour | 3,000 | 3,000 | 3,000 | 3,000 | 3,000 | 3,000 | 3,000 | 3,000 | 3,000 |
| | Shortening | 500 | 500 | 500 | — | 500 | 500 | 500 | — | 500 |
| | Sucrose | 500 | 500 | 300 | 500 | — | 500 | 500 | 500 | 500 |
| | Granulated salt | 200 | 200 | 200 | 200 | 200 | 200 | 200 | 200 | 200 |
| | Water | 2,000 | 2,000 | 2,000 | 2,000 | 2,000 | 2,000 | 2,000 | 2,000 | 2,000 |
| | Total (g) | 6,200 | 6,200 | 6,000 | 5,700 | 5,700 | 6,200 | 6,200 | 5,700 | 6,200 |

Example 10

(1) Preparation of sponge dough

The ingredients indicated in Table 3, except for the strong wheat flour, were dissolved in water. Next, 7,000 g of strong wheat flour were placed in a mixer, and the aforesaid ingredients dissolved in water were added, then the mixture was kneaded at a low speed (30-35 rpm) for 3 minutes and then at a high speed (60-70 rpm) for 3 minutes. The mixed bread dough was then transferred to a lightly greased vessel and allowed to ferment for 6 weeks at a temperature of -3°C and a relative humidity of 90%.

(2) Preparation of bread dough

The sponge dough obtained as indicated in paragraph (1) above was then transferred to a mixer, and bread dough was prepared by the same process as used in Example 1, except that the ingredients of bread dough except for sponge dough indicated in Table 3 were added.

Example 11

Bread dough was obtained by the same process as that used in Example 10, except that ISOMALTO 500 was excluded.

Example 12

Bread dough was obtained by the same process as that used in Example 2, except that PCS (Asahi Kasei Kogyo, Ltd.) was used in place of PC200.

Table 3

| | | Example 10 |
|---|---|---|
| Ingredients for sponge dough (g) | Strong wheat flour | 7, 000 |
| | Skim milk powder | 200 |
| | Isomalto [1] | 500 |
| | Yeast | 200 |
| | Emulsifier | 30 |
| | Sankyo food [2] | 10 |
| | Dabiase K27 [3] | 10 |
| | Water | 4, 200 |
| | Total (g) | 12, 150 |
| Ingredients of bread dough except for sponge dough (g) | Strong wheat flour | 3, 000 |
| | Shortening | 500 |
| | Sucrose | 500 |
| | Granulated salt | 200 |
| | Yeast | 200 |
| | Water | 2, 000 |
| | Total (g) | 6, 200 |

[1] Manufactured by Showa Sangyo, Ltd.  Isomalto-oligosaccharide

[2] Manufactured by Sankyo foods, Ltd.  Yeast food containing potassium bromate (inorganic)

[3] Manufactured by Daikin Industries, Ltd.  Amylase

Example 13

Bread doughs obtained in Examples 1 to 12 were allowed to ferment still further, after which bread was obtained by baking these bread doughs at approximately 200° C. The bread was uniform, finegrained, soft, and characterized by a pleasant chewing sensation. After these bread samples had been stored at room temperature (20° C) for 72 hours, the resulting degree of staling was extremely slight as compared with bread prepared by conventional methods. As compared with conventional types of bread dough prepared using enzymes containing no substances which increase water absorption, bread dough prepared by the method of the present invention displays no appreciable softening or stickiness, and is therefore well suited for the mass production of bread with a richer flavor by line production.

**Claims**

1. Dough for bread making comprising the ingredients wheat flour, water, yeast, an enzyme, and at lease one substance with the property of increasing water absorption, selected from saccharides, oils or fats, and dairy products, wherein
said enzyme is capable of decomposing the components of said wheat flour, and
said substance with the property of increasing water absorption, when compounded with said dough, effectively raises the water absorption of said dough.

2. Dough according to claim 1, wherein said enzyme is amylase and/or protease.

3. Dough according to claim 2, wherein said amylase is derived from a microorganism belonging to the genus Aspergillus.

4. Dough according to claim 1, 2 or 3, wherein said saccharides are selected from isomaltooligosaccharides, sucrose, fructose, maltodextrin, α-starch and dietary fibers.

5. Dough according to any preceding claim, wherein said oils or fats are selected from shortening, margarine, and powdered fats.

6. Dough according to any preceding claim, wherein said dairy product is selected from fresh milk, whole milk powder, skim milk powder, fresh cream, and yoghurt.

7. A method of bread making comprising fermenting dough as claimed in any preceding claim and baking the dough after said fermentation.

8. A method of bread making according to claim 7, which is carried out using the sponge and dough method, with fermentation of said dough being conducted in the unfrozen state, at a temperature in the range of -10 to 10° C, for a period not exceeding approximately 15 weeks.

9. A method of bread making according to claim 8, wherein said fermentation is conducted for from approximately 72 hours to approximately 15 weeks.

10. A method of bread making according to claim 7, which is carried out using the straight dough method, with dough fermentation being conducted in the unfrozen state, at a temperature in the range of -10 to 10° C, for a period not exceeding approximately 15 weeks.

11. A method of bread making according to claim 10, wherein said fermentation is conducted for a period in the range from approximately 5 hours to approximately 15 weeks.